# EUROPÄISCHE PATENTSCHRIFT

(11) **EP 3 135 463 B1**
(45) Veröffentlichungstag und Bekanntmachung des Hinweises auf die Patenterteilung: **12.06.2019**
(21) Anmeldenummer: 16184077.2
(22) Anmeldetag: 12.08.2016
(51) Int. Cl.: B29C 70/48, B29C 65/48, B29C 70/86, F16F 1/366, F16F 9/30, B29C 70/78, B29C 45/14, B29C 65/00, F16F 1/38, B29L 31/04, B29L 31/00, B29C 45/00, B29K 21/00, B29K 105/00

(54) **VERFAHREN ZUR HERSTELLUNG EINES LAGERELEMENTS SOWIE LAGERELEMENT**
METHOD OF MANUFACTURING A BEARING ELEMENT AND BEARING ELEMENT
PROCEDE DE FABRICATION D'UN ELEMENT DE SUPPORT ET ELEMENT DE SUPPORT

(30) Priorität: 24.08.2015 DE 102015113983
(43) Veröffentlichungstag der Anmeldung: 01.03.2017
(73) Patentinhaber: EFFBE GmbH, 63628 Bad Soden-Salmünster (DE)
(72) Erfinder: Martin, Ulrich, 65468 Trebur (DE); Kehr, Andreas, 21720 Grünendeich (DE); Spatzig, Wolfgang, 09123 Chemnitz (DE)
(74) Vertreter: Schmid, Nils T.F.

(56) Entgegenhaltungen:
- EP-A1- 0 620 106
- EP-A2- 0 351 738
- DE-A1-102013 218 727
- GB-A- 2 038 446
- JP-A- S6 161 834
- JP-A- S56 155 739
- US-A- 6 082 721

## Beschreibung

Die vorliegende Erfindung betrifft ein Verfahren zur Herstellung eines Lagerelements umfassend die Bereitstellung eines zumindest ein erstes Elastomermaterial umfassenden Hauptkörpers, Bereitstellung zumindest eines zumindest einen ersten Faserverbundwerkstoff aufweisenden ersten Beschichtungselements und Aufbringen des ersten Beschichtungselements auf zumindest einen Bereich einer ersten Oberfläche des Hauptkörpers sowie ein Lagerelement, insbesondere herstellbar mittels eines erfindungsgemäßen Verfahrens, umfassend zumindest einen zumindest ein erstes Elastomermaterial umfassenden Hauptkörper und zumindest ein zumindest einen ersten Faserverbundwerkstoff umfassendes erstes Beschichtungselement, wobei das erste Beschichtungselement zumindest eine erste Oberfläche des Hauptkörpers zumindest bereichsweise bedeckt.

Derartige Lagerelemente werden in den verschiedensten Anwendungen, bei denen eine insbesondere dämpfende Lagerung eines Bauteils, wie einer Maschine auf einer Tragstruktur, insbesondere einem Fundament, erreicht werden soll, eingesetzt.

Das Lagerelement wirkt insbesondere als Federelement, insbesondere als gebundenes Federelement. Unter "gebunden" wird hierbei verstanden, dass der elastische bzw. dämpfende Teil des Lagerelements so ausgebildet ist, dass auf einer Hauptfläche ein zusätzliches Element aufgebracht ist, welches dazu führt, dass eine höhere Belastbarkeit des Federkörpers erreicht wird und gleichzeitig eine Federkennlinie von einem exponentiellen in einen eher linearen Verlauf abgewandelt wird.

Aus dem Stand der Technik ist es bekannt, dass als zusätzliche Elemente bzw. Auflagekörper metallische Bauteile eingesetzt werden. Diese weisen jedoch den Nachteil auf, dass sie bei Belastungen und unterschiedlichen Temperaturen unterschiedliche Ausdehnungskoeffizienten als das elastische Material aufweisen. So kann es zu Verspannungen, die die Federeigenschaften des Lagers negativ beeinflussen oder sogar zu einer Ablösung des Auflagekörpers kommen.

Aus dem Stand der Technik ist außerdem die GB 2 038 446 A bekannt, welche einen Schwingungsdämpfer mit einem von diesem umfassten elastomeren Dämpfungsmaterial zwischen zwei festen Elementen betrifft.

Ferner offenbart die EP 0 620 106 A1 ein Verfahren zur Herstellung eines Schwingungsisolators.

Die US 6,082,721 betrifft eine Buchse, mit einem ersten äußeren Buchsenelement, einem zweiten inneren Buchsenelement, das einen ringförmigen Spalt zwisschen dem ersten und zweiten Buchsenelement definiert und einer elastomeren Verbindung, die innerhalb des ringförmigen Spaltes zwisschen dem ersten und zweiten Buchsenelement angeordnet ist.

Die JP-S61-61834 A betrifft ein Element aus faserverstärktem Harz, das mit einer von einer Gummischicht umgebenen Buchse ausgestattet ist.

Darüber hinaus wurde in der DE 10 2013 009 523 A1 ein gattungsgemäßes Verfahren und ein gattungsgemäßes Lagerelement vorgeschlagen. Es wird vorgeschlagen, dass auf einen Polyurethanelastomerkunststoffkörper auf zwei voneinander wegweisenden Flachseiten des Körpers Verbundmaterialschichten angeordnet werden. Diese Verbundmaterialschichten enthalten Kohlenstofffasern, die in eine Kunststoffmatrix eingebettet sind. Zur Verbindung des Polyurethanelastomerkunststoffkörpers mit den Kohlenstofffaserverbundmaterialschichten wird vorgeschlagen, dass die Verbundmaterialschichten als sogenanntes Prepreg-Material bereitgestellt wird. Es handelt sich also um vorimpregnierte Fasern, die als Halbzeug mit Reaktionsharzen vorimpregniert sind. Derartige Materialien werden zur Herstellung von Bauteilen unter Temperatur und Druck ausgehärtet. In der DE 10 2013 009 523 A1 wird daher vorgeschlagen, dass die Faserverbundschichten auf den Polyurethankörper aufgelegt werden und unter gleichzeitiger Anwendung von Druck und Wärme mit dem Körper stoffschlüssig verbunden und zugleich ausgehärtet werden.

Dieser Fundamentdämpfer weist jedoch den Nachteil auf, dass er hohen Belastungen nicht lange widerstehen kann. So hat sich gezeigt, dass bei Einsatz eines derartigen Fundamentdämpfers, beispielsweise zur Lagerung einer Windkraftanlage auf einem Fundament, aufgrund der entstehenden Belastung bereits nach kurzer Zeit eine Beschädigung der Struktur des Dämpfers erfolgt. Dadurch werden die Dämpfungseigenschaften des Dämpfers negativ beeinflusst, so dass der Fundamentdämpfer nicht für entsprechend große Belastbarkeit geeignet ist bzw. der Dämpfer überdimensioniert werden muss, um entsprechende Belastungen widerstehen zu können und Beschädigungen zu vermeiden.

Es ist daher Aufgabe der vorliegenden Erfindung, das gattungsgemäße Lagerelement derartig weiterzuentwickeln, dass die Nachteile des Stands der Technik überwunden werden, insbesondere ein Verfahren zur Herstellung eines Lagerelements bzw. ein Lagerelement bereitgestellt wird, mit denen im Vergleich zu dem gattungsgemäßen Dämpfer eine Steigerung der Belastbarkeit, eine Gewichtseinsparung und eine Verringerung der Baugröße ermöglicht wird. Die das Verfahren betreffende Aufgabe wird durch eine erste Alternative, die nicht Teil der beanspruchten Erfindung aber hilfreich für deren Verständnis ist, dadurch gelöst, dass der erste Faserverbundwerkstoff des ersten Beschichtungselements vor dem Aufbringen auf den Hauptkörper zumindest teilweise und/oder zumindest bereichsweise ausgehärtet wird und mittels zumindest eines zumindest ein erstes Adhäsionsmaterial umfassenden ersten Verbindungselements zumindest bereichsweise mit dem Hauptkörper verbunden wird.

Die das Verfahren betreffende Aufgabe wird erfindungsgemäß durch eine zweite Alternative durch ein Verfahren nach Anspruch 1 gelöst. Bei dem Verfahren wird der erste Faserverbundwerkstoff des ersten Beschichtungselements vor dem Aufbringen auf den Hauptkörper zumindest teilweise und/oder zumindest bereichsweise ausgehärtet und mittels Angießens und/oder Anspritzens des zumindest einen ersten Elastomermaterials zumindest bereichsweise mit dem Hauptkörper verbunden. Dabei ist besonders bevorzugt, dass das zumindest eine erste Elastomermaterial während des Angießens und/oder Anspritzens in einem flüssigen, fließfähigen und/oder viskosen Zustand ist. Auch wird mit der Erfindung vorgeschlagen, dass durch das Angießen und/oder Anspritzen des zumindest einen ersten Elastomermaterials der Hauptkörper ausgebildet wird.

Dabei ist besonders bevorzugt, dass das erste Beschichtungselement vor oder nach dem Aufbringen auf den Hauptkörper auf der dem Hauptkörper abgewandten Seite zumindest bereichsweise mit zumindest einem, vorzugsweise zumindest ein, insbesondere dem ersten Elastomermaterial im wesentlichen entsprechendes, zweites Elastomermaterial umfassenden, ersten Zwischenelement verbunden wird.

Auch wird mit der Erfindung vorgeschlagen, dass das erste Zwischenelement auf der dem Hauptkörper und/oder dem ersten Beschichtungselement abgewandten Seite und/oder das erste Beschichtungselement auf der dem Hauptkörper abgewandten Seite zumindest bereichsweise mit zumindest einem, vorzugsweise einen, insbesondere dem ersten Faserverbundwerkstoff entsprechenden und/oder zumindest teilweise und/oder zumindest bereichsweise ausgehärten, zweiten Faserverbundwerkstoff umfassenden, zweiten Beschichtungselement verbunden wird.

Weiterhin kann ein erfindungsgemäßes Verfahren dadurch gekennzeichnet sein, dass das erste Beschichtungselement mittels zumindest einem zweiten Verbindungselement mit dem ersten Zwischenelement und/oder dem zweiten Beschichtungselement und/oder das erste Zwischenelement mittels zumindest einem dritten Verbindungselement mit dem zweiten Beschichtungselement verbunden wird, wobei vorzugsweise das zweite Verbindungselement zumindest ein, insbesondere dem ersten Adhäsionsmaterial entsprechendes, zweites Adhäsionsmaterial und/oder das dritte Verbindungselement zumindest ein, insbesondere dem ersten Adhäsionsmaterial und/oder dem zweiten Adhäsionsmaterial entsprechendes, drittes Adhäsionsmaterial umfasst.

Weiterhin wird mit der Erfindung vorgeschlagen, dass auf der dem ersten Zwischenelement und/oder dem ersten Beschichtungselement abgewandten Seite des zweiten Beschichtungselements und/oder der dem Hauptkörper abgewandten Seite des ersten Zwischenelements zumindest ein, insbesondere zumindest ein drittes Elastomermaterial umfassendes, zweites Zwischenelement, vorzugweise eine Vielzahl von zweiten Zwischenelementen, und/oder zumindest ein, insbesondere zumindest einen, insbesondere zumindest teilweise und/oder zumindest bereichsweise ausgehärteten, dritten Faserverbundwerkstoff umfassendes, dritte Beschichtungselement, vorzugsweise eine Vielzahl von dritten Beschichtungselementen, angeordnet wird.

Auch kann in einer bevorzugten Ausführungsform vorgesehen sein, dass das zweite Zwischenelement bzw. die zweiten Zwischenelemente mittels zumindest einem, vorzugsweise zumindest ein viertes Adhäsionsmaterial umfassendes, vierten Verbindungselement mit dem ersten Zwischenelement, dem zweiten Beschichtungselement und/oder einem weiteren zweiten Zwischenelement und/oder dass das dritte Beschichtungselement mittels zumindest einem, vorzugsweise zumindest ein fünftes Adhäsionsmaterial umfassendes, fünften Verbindungselement mit dem zweiten Zwischenelement, dem zweiten Beschichtungselement und/oder einem weiteren dritten Beschichtungselement verbunden wird.

Weiterhin schlägt die Erfindung vor, dass das erste Beschichtungselement, das zweite Beschichtungselement, das dritte Beschichtungselement und/oder die dritten Beschichtungselemente vor dem Aufbringen bzw. Verbinden im Wesentlichen vollständig ausgehärtet wird bzw. werden.

Für die erste Alternative des Verfahrens wird vorgeschlagen, dass das erste Verbindungselement, das zweite Verbindungselement, das dritte Verbindungselement, das vierte Verbindungselement und/oder das fünfte Verbindungselement, insbesondere in einem zumindest bereichsweise flüssigen und/oder fließfähigen Zustand, vorzugsweise des ersten Adhäsionsmaterials, zweiten Adhäsionsmaterials, dritten Adhäsionsmaterials, vierten Adhäsionsmaterials und/oder fünften Adhäsionsmaterials, vor der Anordnung bzw. Verbindung zumindest bereichsweise auf die erste Oberfläche des Hauptkörpers, eine dem Hauptkörper zugewandte Seite des ersten Beschichtungselementes, des ersten Zwischenelements, des zweiten Beschichtungselements, des zweiten Zwischenelements und/oder des dritten Beschichtungselements und/oder eine dem Hauptkörper abgewandte Seite des ersten Beschichtungselementes, des ersten Zwischenelements, des zweiten Beschichtungselements, des zweiten Zwischenelements und/oder des dritten Beschichtungselements aufgebracht wird bzw. werden.

Die das Lagerelement betreffende Aufgabe wird in einer ersten Alternative, die nicht Teil der beanspruchten Erfindung aber hilfreich für deren Verständnis ist, dadurch gelöst, dass das Lagerelement zumindest ein zumindest ein erstes Adhäsionsmaterial umfassendes und zumindest bereichsweise zwischen dem Hauptkörper und dem ersten Beschichtungselement angeordnetes erstes Verbindungselement umfasst.

In einer zweiten Alternative wird diese Aufgabe erfindungsgemäß durch ein Lagerelement nach Anspruch 6 gelöst. Ein erfindungsgemäßes Lagerelement kann auch dadurch gekennzeichnet sein, dass das Lagerelement ferner zumindest ein erstes Zwischenelement, zumindest ein zweites Zwischenelement, zumindest ein zweites Beschichtungselement, zumindest ein drittes Beschichtungselement, zumindest ein zweites Verbindungselement, zumindest ein drittes Verbindungselement, zumindest ein viertes Verbindungselement und/oder zumindest ein fünftes Verbindungselement umfasst.

Weiterhin wird mit der Erfindung vorgeschlagen, dass die Beschichtungselemente und die Zwischenelemente von dem Hauptkörper ausgehend zumindest bereichsweise abwechselnd aufeinander angeordnet sind, insbesondere unter zumindest bereichsweiser Anordnung zumindest eines Verbindungselementes zwischen einem jeweiligen Beschichtungselement und Zwischenelement, zumindest zwei Beschichtungselemente ohne Anordnung eines Zwischenelements zumindest bereichsweise aufeinander angeordnet sind, insbesondere unter zumindest bereichsweiser Anordnung zumindest eines Verbindungselementes zwischen den Beschichtungselementen und/oder zumindest zwei Zwischenelemente ohne Anordnung eines Beschichtungselementes zumindest bereichsweise aufeinander angeordnet sind, insbesondere unter zumindest bereichsweiser Anordnung zumindest eines Verbindungselementes zwischen den Zwischenelementen.

Auch ist bevorzugt, dass das erste Elastomermaterial des Hauptkörpers, zumindest ein, vorzugsweise angespritztes und/oder angegossenes zweites Elastomermaterial des ersten Zwischenelements und/oder zumindest ein, vorzugsweise angespritztes und/oder angegossenes drittes Elastomermaterial des zweiten Zwischenelements, synthetischen Kautschuk, Naturkautschuk, Silikon-Kautschuk, Polyurethan, zumindest ein thermoplastisches Elastomer (TPE) und/oder zumindest eine Mischung zumindest zweier dieser Materialien umfasst. Weiterhin liefert die Erfindung ein Lagerelement, welches dadurch gekennzeichnet ist, dass der erste Faserverbundwerkstoff, zumindest ein zweiter Faserverbundwerkstoff des zweiten Beschichtungselements und/oder zumindest ein dritter Faserverbundwerkstoff des dritten Beschichtungselements, vorzugsweise in zumindest eine Matrix aus zumindest einem Kunststoffmaterial eingebettet, Kohlenstofffasern, Glasfasern, synthetische Fasern, Naturfasern und/oder Mischungen zumindest zweier dieser Fasern umfasst.

Weiterhin ist bevorzugt, dass das erste Adhäsionsmaterial, zumindest ein zweites Adhäsionsmaterial des zweiten Verbindungselements, zumindest ein drittes Adhäsionsmaterial des dritten Verbindungselements, zumindest ein viertes Adhäsionsmaterial des vierten Verbindungselements und/oder zumindest ein fünftes Adhäsionsmaterial des fünften Verbindungselements zumindest einen 2-Komponenten Klebstoff und/oder zumindest einen 2-Komponenten Harz umfasst bzw. umfassen.

Auch ist bevorzugt, dass das erste Beschichtungselement, das zweite Beschichtungselement, das dritte Beschichtungselement, das erste Zwischenelement, das zweite Zwischenelement, das erste Verbindungselement, das zweite Verbindungselement, das dritte Verbindungselement, das vierte Verbindungselement und/oder das fünfte Verbindungselement im wesentlichen plattenförmig ausgebildet ist bzw. sind. insbesondere eine Ausdehnung in eine Normalenrichtung der ersten Oberfläche zumindest bereichsweise geringer als eine Ausdehnung senkrecht zu der Normalenrichtung der ersten Oberfläche ist.

Weiterhin wird mit der Erfindung vorgeschlagen, dass auf zumindest einer zweiten Oberfläche des Hauptkörpers zumindest ein weiteres erstes Beschichtungselement, zweites Beschichtungselement, drittes Beschichtungselement, erstes Zwischenelement, zweites Zwischenelement, erstes Verbindungselement, zweites Verbindungselement, drittes Verbindungselement, viertes Verbindungselement und/oder fünftes Verbindungselement angeordnet ist bzw. sind, wobei vorzugsweise die zweite Oberfläche zumindest bereichsweise auf einer der ersten Oberfläche des Hauptkörpers abgewandten Seite des Hauptkörpers angeordnet ist, die zweite Oberfläche zumindest bereichsweise parallel zu der ersten Oberfläche verläuft, die erste Oberfläche zumindest bereichsweise in die zweite Oberfläche übergeht, insbesondere zumindest eine Kante und/oder zumindest eines Ecke des Hauptkörpers zwischen der ersten Oberfläche und der zweiten Oberfläche angeordnet ist.

Ein erfindungsgemäßes Lagerelement kann auch dadurch gekennzeichnet sein, dass der Hauptkörper zumindest bereichsweise eine Würfelform, Quaderform, Zylinderform, Zylindermantelform, Kegelform, Kegelstumpfform, Kegelsegmentform, Prismenform, Parabolidform und/oder Rotationsparabolidform aufweist, wobei vorzugsweise die erste Oberfläche von zumindest einer Außenmantelfläche des Hauptkörpers und/oder die zweite Oberfläche von zumindest einer Innenwandung des Hauptkörpers umfasst ist bzw. sind.

Besonders bevorzugt ist hierbei, dass die erste Oberfläche und/oder die zweite Oberfläche zumindest bereichsweise eben ist bzw. sind.

Weiterhin wird mit der Erfindung vorgeschlagen, dass die erste Oberfläche und/oder die zweite Oberfläche zumindest bereichsweise gekrümmt und/oder gewölbt ist bzw. sind.

Auch sieht die Erfindung vor, dass das erste Beschichtungselement, das zweite Beschichtungselement, das dritte Beschichtungselement, das erste Zwischenelement, das zweite Zwischenelement, das erste Verbindungselement, das zweite Verbindungselement, das dritte Verbindungselement, das vierte Verbindungselement und/oder das fünfte Verbindungselement zumindest bereichsweise ringförmig, ringsegmentförmig und/oder schalenförmig ausgebildet ist bzw. sind.

Besonders bevorzugte Ausführungsformen des Lagerelements sehen vor, dass der Hauptkörper, das erste Beschichtungselement, das zweite Beschichtungselement, das dritte Beschichtungselement, das erste Zwischenelement, das zweite Zwischenelement, das erste Verbindungselement, das zweite Verbindungselement, das dritte Verbindungselement, das vierte Verbindungselement und/oder das fünfte Verbindungselement zumindest ein Montageelement, vorzugsweise umfassend zumindest eine Öffnung, zumindest eine Bohrung, zumindest eine Aufnahme und/oder zumindest eine Bolzenaufnahme umfasst bzw. umfassen.

Schließlich wird mit der Erfindung vorgeschlagen, dass das Lagerelement von zumindest einer, vorzugsweise dämpfenden, Maschinenlagerung, Fundamentlagerung und/oder Abstützung umfasst ist.

Dem Verfahren in der ersten Alternative liegt somit die überraschende Erkenntnis zu Grunde, dass durch die Verbindung eines Elastomerkörpers mit einem Beschichtungselement, welches einen Faserverbundwerkstoff umfasst, mittels eines Adhäsionsmaterials eine derartige Struktur hergestellt werden kann, dass das Lagerelement bei gleichbleibenden Dimensionen höhere Belastungen wiederstehen kann im Vergleich zu den aus dem Stand der Technik bekannten gattungsgemäßen Lagerelementen. Hierzu ist vorzusehen, dass das Beschichtungselement nicht, wie aus dem Stand der Technik bekannt, als Prepreg-Material bereitgestellt wird, welches erst bei Verbindung mit dem Elastomermaterial ausgehärtet wird, sondern bereits als "fertiges", ausgehärtetes Element bereitgestellt wird. Das so bereits ausgehärtete Beschichtungselement wird dann mittels eines ersten Verbindungselements umfassend ein erstes Adhäsionsmaterial mit dem ein elastomeres Material umfassenden Hauptkörper verbunden. Die Entwickler vermuten, dass durch die Zwischenanordnung des Verbindungselements im Vergleich zu der aus dem Stand der Technik bekannten stoffschlüssigen, direkten Verbindung eine gewisse Relativbewegung zwischen dem Beschichtungselement und dem Hauptkörper ermöglicht wird. Dies führt vermutlich dazu, dass auch bei temperaturbedingten Formveränderungen und bei Formveränderung aufgrund hoher Belastungen die Verbindung zwischen dem Beschichtungselement und dem Elastomermaterial nicht negativ beeinflusst wird, insbesondere intakt bleibt. So wurde insbesondere erkannt, dass bei aus dem Stand der Technik bekannten Lagerelementen eine Beeinträchtigung der Struktur, insbesondere in dem Verbindungsbereich zwischen dem den Faserverbundwerkstoff umfassenden Beschichtungselement und dem das Elastomermaterial umfassenden Hauptkörper, auftritt.

Das Verfahren erlaubt also in einer ersten Alternative die Beschichtung von Bauteilen aus Elastomer, wie einem synthetischen Kautschuk, Naturkautschuk, Silikonkautschuk, Polyurethan, thermoplastischen Elastomer bzw. Gemische aus und mit einem dieser vorgenannten Werkstoffe, mit Faserverbundwerkstoffen, also beispielsweise in einer Matrix aus Kunststoff gebundenen Kohlefasern, Glasfasern, synthetischen Fasern, Naturfasern oder Gemischen von und mit den vorgenannten Fasern, durch Kleben wodurch eine höhere Belastbarkeit des Elastomerbauteils erreicht werden kann. Die Beschichtung mit dem Faserverbundwerkstoff kann einseitig oder mehrseitig an angrenzenden, gegenüberliegenden oder anderweitig angeordneten Flächen erfolgen. In den einzelnen Elementen können Bohrungen, Gewinde und Bolzen geordnet sein oder diese können mit weiteren Bauteilen kombiniert sein. Insbesondere ist auch vorstellbar, dass zur besseren Einstellung der Dämpfungs- bzw. Federcharakteristiken des Lagerelements bzw. zur Erhöhung der Belastbarkeit ein mehrschichtiger Aufbau realisiert sein kann. Bei diesem mehrschichtigen Aufbau werden auf das erste Beschichtungselement weitere Verbindungselemente, Zwischenelemente bzw. Beschichtungselemente aufgebracht. Insbesondere ist bei diesem mehrschichtigen Aufbau ist bevorzugt, dass sich Schichten, die ein Elastomermaterial umfassen und Schichten, die einen Faserverbundwerkstoff umfassen, abwechselnd ausgehend von dem Hauptkörper angeordnet werden. Auch ist vorstellbar, dass mehrere Beschichtungselemente, also Lagen, die einen Faserverbundwerkstoff umfassen, ohne Zwischenschaltung eines Zwischenelements aneinander befestigt werden können oder aber zumindest zwei Zwischenelemente, die ein Elastomermaterial umfassen, ohne Zwischenschaltung eines Beschichtungselements angeordnet werden können.

Bevorzugt werden diese Zwischenelemente und zusätzliche Beschichtungselemente durch weitere Verbindungselemente miteinander verbunden. Dabei können die Verbindungselemente jeweils ein Adhäsionsmaterial umfassen, aber auch auf andere Weise eine Verbindung herstellen, insbesondere eine stoffschlüssige Verbindung wie beispielsweise durch ein Heißsiegeln.

Auch ist vorstellbar, dass durch die jeweiligen Zwischenelemente beziehungsweise Beschichtungselemente ein Zusammenbau des Lagerelements in einen Zwischenzustand erfolgt, insbesondere durch die Verbindung der Endzustand, insbesondere eine vollständige Aushärtung, erreicht wird.

Der Erfindung liegt die überraschende Erkenntnis zu Grunde, dass in einer zweiten Alternative auf ein Verbindungselement umfassend ein erstes Adhäsionsmaterial auch verzichtet werden kann, wenn das Beschichtungselement durch Angießen und/oder Anspritzen eines flüssigen, fließfähigen und/oder viskosen Elastomers bei beziehungsweise mit der Herstellung des Hauptkörpers direkt mit diesem verbunden wird. Mit anderen Worten kann der Hauptkörper durch Angießen und/oder Anspritzen direkt an dem Beschichtungselement ausgebildet werden. Damit ist auch ohne ein zusätzliches Adhäsionsmaterial eine Adhäsionsverbindung zwischen dem ein Elastomermaterial umfassenden Hauptkörper und dem einen ersten Faserverbundwerkstoff aufweisenden ersten Beschichtungselements erreichbar. Auch damit kann das Lagerelement bei gleichbleibenden Dimensionen höheren Belastungen wiederstehen im Vergleich zu den aus dem Stand der Technik bekannten gattungsgemäßen Lagerelementen. Hierzu ist vorzusehen, dass das Beschichtungselement nicht, wie aus dem Stand der Technik bekannt, als Prepreg-Material bereitgestellt wird, welches erst bei Verbindung mit dem Elastomermaterial ausgehärtet wird, sondern bereits als "fertiges", ausgehärtetes Element bereitgestellt wird. Das so bereits ausgehärtete Beschichtungselement wird dann mittels Angießens und/oder Anspritzens eines flüssigen, fließfähigen und/oder viskosen Elastomers bei beziehungsweise mit der Herstellung des Hauptkörpers unmittelbar mit ebendiesem verbunden. So wurde insbesondere erkannt, dass bei aus dem Stand der Technik bekannten Lagerelementen eine Beeinträchtigung der Struktur, insbesondere in dem Verbindungsbereich zwischen dem den Faserverbundwerkstoff umfassenden Beschichtungselement und dem das Elastomermaterial umfassenden Hauptkörper, auftritt.

Das erfindungsgemäße Verfahren erlaubt also in einer zweiten Alternative die Beschichtung von Bauteilen aus Elastomer, wie einem synthetischen Kautschuk, Naturkautschuk, Silikonkautschuk, Polyurethan, thermoplastischen Elastomer bzw. Gemische aus und mit einem dieser vorgenannten Werkstoffe, mit Faserverbundwerkstoffen, also beispielsweise in einer Matrix aus Kunststoff gebundenen Kohlefasern, Glasfasern, synthetischen Fasern, Naturfasern oder Gemischen von und mit den vorgenannten Fasern, durch direktes Angießen und/oder Anspirtzen des flüssigen, fließfähigen und/oder viskosen Elastomers bei beziehungsweise mit der Herstellung des Hauptköpers/Bauteils.

Die Beschichtung mit dem Faserverbundwerkstoff kann einseitig oder mehrseitig an angrenzenden, gegenüberliegenden oder anderweitig angeordneten Flächen erfolgen. In den einzelnen Elementen können Bohrungen, Gewinde und Bolzen geordnet sein oder diese können mit weiteren Bauteilen kombiniert sein. Insbesondere ist auch vorstellbar, dass zur besseren Einstellung der Dämpfungs- bzw. Federcharakteristiken des Lagerelements bzw. zur Erhöhung der Belastbarkeit ein mehrschichtiger Aufbau realisiert sein kann. Bei diesem mehrschichtigen Aufbau werden auf das erste Beschichtungselement weitere Zwischenelemente bzw. Beschichtungselemente aufgebracht. Insbesondere ist bei diesem mehrschichtigen Aufbau ist bevorzugt, dass sich Schichten, die ein Elastomermaterial umfassen und Schichten, die einen Faserverbundwerkstoff umfassen, abwechselnd ausgehend von dem Hauptkörper angeordnet werden. Auch ist vorstellbar, dass mehrere Beschichtungselemente, also Lagen, die einen Faserverbundwerkstoff umfassen, ohne Zwischenschaltung eines Zwischenelements aneinander befestigt werden können oder aber zumindest zwei Zwischenelemente, die ein Elastomermaterial umfassen, ohne Zwischenschaltung eines Beschichtungselements angeordnet werden können. Auch ist vorstellbar, dass durch die jeweiligen Zwischenelemente beziehungsweise Beschichtungselemente ein Zusammenbau des Lagerelements in einen Zwischenzustand erfolgt, insbesondere durch die Verbindung der Endzustand, insbesondere eine vollständige Aushärtung, erreicht wird.

Bei einer solchen mehrschichtigen Anordnung handelt es sich, wenn jede der Schichten durch ein entsprechendes Federelement beschrieben wird, um eine Reihenschaltung von Federelementen. In einer solchen Reihenschaltung erfahren alle Federelemente/Schichten die gleiche Last (Kraft) wobei sich die Federwege der einzelnen Federelemente zum Gesamtfederweg addieren. Dementsprechend entstehen auch in jeder Schicht Relativbewegungen.

Anders bei einer parallelen Anordnung von Schichten in Form einer Parallelschaltung, bei der die entsprechenden Federelemente einer jeden Schicht nebeneinander angeordnet sind. In einer solchen Parallelschaltung verteilt sich die Last (Kraft) auf alle Federelemente, wobei jedoch alle Federelemente den gleichen Federweg aufweisen.

Im Rahmen der Fertigung kann es dabei notwendig sein, dass die Schichten zeitlich nacheinander aufgebracht werden. Das heißt, erst wenn die vorhergehende Schicht ausgehärtet ist, kann die nächste aufgebracht werden.

Insgesamt ermöglicht es die Erfindung, dass durch die Beschichtung der Elastomerelemente mit einem Faserverbundwerkstoff im Vergleich zu einer Beschichtung mit einem Metall eine Federsteife der Elastomerelemente im Wesentlichen nicht beeinflusst wird. Insbesondere durch die hohe Festigkeit bei kleinen Dicken oder Querschnitten sind Faserverbundwerkstoffe geeignet, Bauteile aus Metall zu ersetzen. Durch die Verwendung vorgefertigter Beschichtungselemente in dem Sinne, dass diese ausgehärtete Faserverbundstoffe umfassen, und durch eine Adhäsionsverbindung, wie beispielsweise einem Kleben, mit dem Elastomerelement verbunden werden können, können Lagerelemente bereitgestellt werden, die sich durch eine hohe Belastbarkeit bei gleichzeitig geringem Bauvolumen und geringem Gewicht auszeichnen. Dabei kann die beschriebene Adhäsionsverbindung auch durch Ausbildung des Elastomerelements durch Angießen und/oder Anspritzen und damit ohne den Einsatz von zusätzlichen Adhäsionsmaterial erreicht werden, jedoch mit denselben Vorteilen wie zuvor angeführt. Weitere Merkmale und Vorteile der Erfindung ergeben sich aus der nachfolgenden Beschreibung, in der bevorzugte Ausführungsformen der Erfindung anhand von schematischen Zeichnungen erläutert werden.

Dabei zeigt
- Figur 1: eine erste Ausführungsform eines Lagerelementes;
- Figur 2a -2c: jeweils Abwandlungen des Lagerelements der Figur 1;
- Figur 3: eine zweite Ausführungsform eines Lagerelements;
- Figuren 4a-4d: jeweils Abwandlungen des Lagerelements der Figur 3;
- Figur 5: eine dritte Ausführungsform eines Lagerelements;
- Figuren 6a-6e: jeweils Abwandlungen des Lagerelements der Figur 5;
- Figur 7: eine vierte Ausführungsform eines Lagerelements;
- Figur 8: eine Abwandlung des Lagerelements der Figur 7; und
- Figur 9: eine Querschnittsansicht einer fünften Ausführungsform eines Lagerelements.

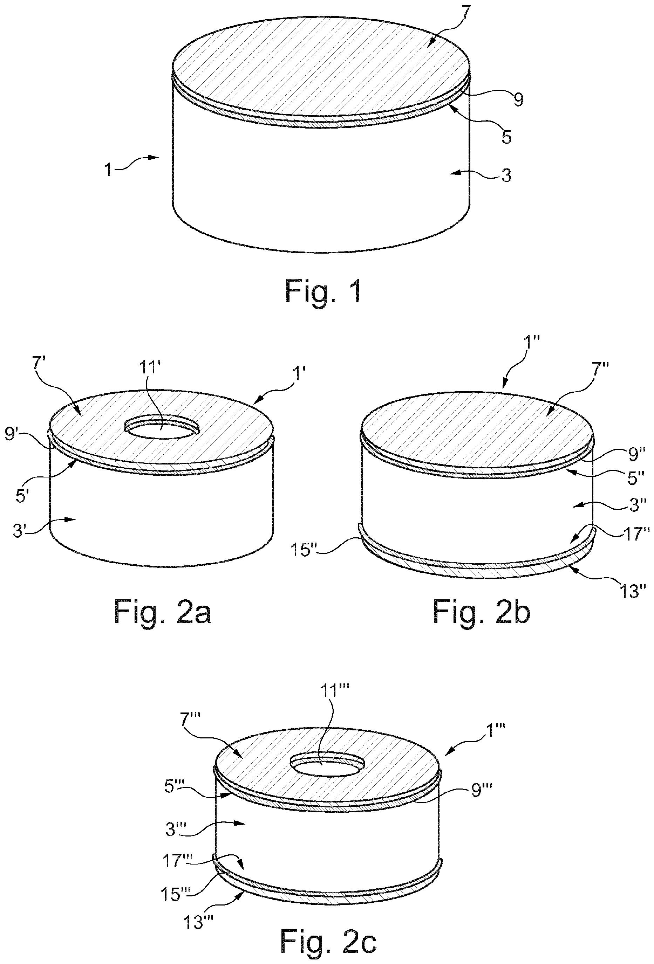

In Figur 1 ist ein erstes Lagerelement 1 dargestellt. Diese zeigt nicht die beanspruchte Erfindung, ist aber hilfreich für deren Verständnis. Das Lagerelement 1 umfasst einen Hauptkörper 3. Der Hauptkörper 3 umfasst ein Elastomermaterial, insbesondere ein thermoplastisches Elastomermaterial. Auf einer ersten Oberfläche 5 des Hauptkörpers 3 ist ein erstes Beschichtungselement 7 angeordnet. Bei dem Beschichtungselement 7 handelt es sich um ein Bauteil, welches einen Faserverbundwerkstoff, insbesondere Kohlenfaserverbundwerkstoff, umfasst, wobei das Bauteil vor Verbindung mit dem Hauptkörper 3 im Wesentlichen vollständig ausgehärtet ist.

Eine Verbindung des Hauptkörpers 3 mit dem ersten Beschichtungselement 7 erfolgt mittels eines ersten Verbindungselements 9. Dabei ist das erste Verbindungselement 9 durch einen Adhäsionsmaterial- beziehungsweise Klebstoff gebildet, umfasst dies zumindest. Zur Verbindung des Hauptkörpers 3 wird sowohl die erste Oberfläche 5 als auch die der ersten Oberfläche 5 zugewandte Oberfläche des ersten Beschichtungselements 7 mit dem Adhäsionsmittel beschichtet. Anschließend werden der Hauptkörper 3 und das erste Beschichtungselement 7 miteinander verbunden und nach Trocknung des Adhäsionsmittels entsteht das platten- bzw. schichtförmige erste Verbindungselement 9. Aufgrund der Eigenschaften des Adhäsionsmittels weist dieses eine gewisse Restelastizität auf, so dass es bei Belastungen des Lagerelements 1 zu geringfügigen relativen Bewegungen zwischen dem Hauptkörper 3 und dem ersten Beschichtungselement 7 kommen kann, ohne dass die Struktur des Verbindungselements 9 negativ beeinflusst wird.

In Figur 2a ist eine erste Abwandlung des Lagerelements 1 in Form eines Lagerelements | dargestellt. Diese zeigt nicht die beanspruchte Erfindung, ist aber hilfreich für deren Verständnis. Diejenigen Elemente des Lagerelements 1', die denjenigen des Lagerelements 1 entsprechen, tragen die gleichen Bezugszeichen, allerdings einfach gestrichen. Im Gegensatz zu dem Lagerelement 1, welches im Wesentlichen zylinderförmig ausgebildet ist, weist das Lagerelement 1' einen Hauptkörper 3', der im Wesentlichen zylindermantelförmig ausgebildet ist, auf. Durch diese Form des Hauptkörpers 3' wird eine Öffnung 11' ausgebildet, die eine Befestigung des Lagerelements 1' mittels eines Bolzens ermöglicht.

In Figur 2b ist eine zweite Abwandlung des Lagerelements 1 in Form des Lagerelements 1" dargestellt. Diese zeigt nicht die beanspruchte Erfindung, ist aber hilfreich für deren Verständnis. Diejenigen Elemente des Lagerelements 1", die denjenigen des Lagerelements 1 entsprechen, tragen die gleichen Bezugszeichen, allerdings zweifach gestrichen. Im Gegensatz zu dem Lagerelement 1 weist das Lagerelement 1" ein weiteres erstes Beschichtungselement 13' auf. Das weitere erste Beschichtungselement 13" ist mittels eines weiteren ersten Verbindungselements 15' an einer der ersten Oberfläche 5" gegenüberliegenden zweiten Oberfläche 17" des Hauptkörpers 3" angeordnet.

In der Figur 2c ist eine weitere Abwandlung des Lagerelements 1 in Form des Lagerelements 1'" dargestellt. Diese zeigt nicht die beanspruchte Erfindung, ist aber hilfreich für deren Verständnis. Im Vergleich zu dem Lagerelement 1" weist auch das Lagerelement 1'" eine Öffnung 11'" auf, die eine Befestigung des Lagerelements 1'" an einer Struktur mittels eines Bolzens ermöglicht. Hierzu ist der Hauptkörper 3'" zylindermantelförmig ausgebildet und das erste Beschichtungselement 7"' und das weitere erste Beschichtungselement 13'" ringförmig ausgebildet.

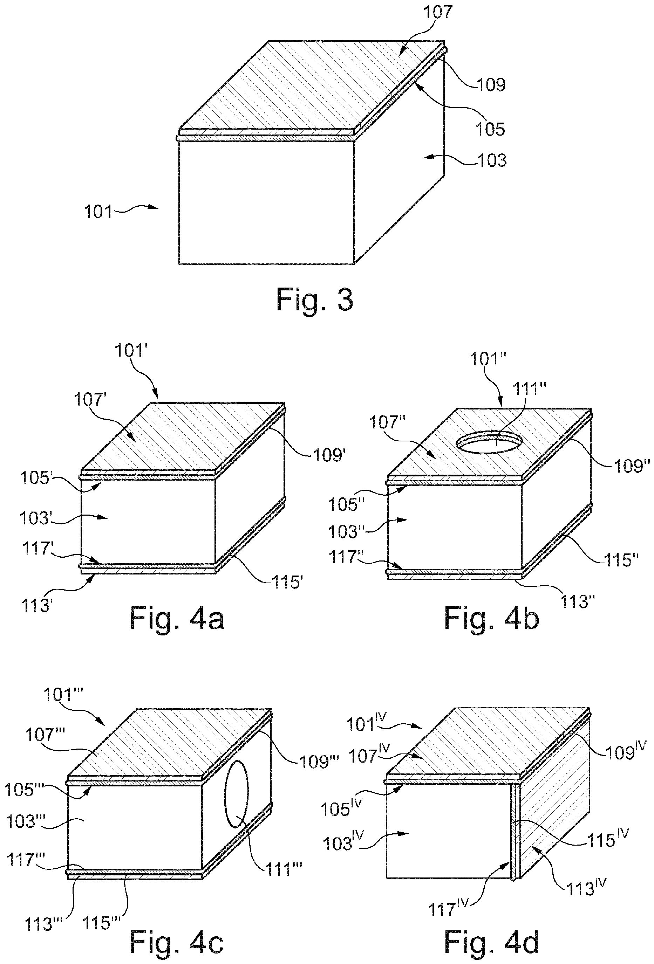

In Figur 3 ist eine weitere Ausführungsform eines Lagerelements 101 dargestellt. Diese zeigt nicht die beanspruchte Erfindung, ist aber hilfreich für deren Verständnis. Diejenigen Elemente des Lagerelements 101, die denjenigen des Lagerelements 1 entsprechen tragen die gleichen Bezugszeichen, allerdings um 100 erhöht. Das Lagerelement 101 unterscheidet sich im Wesentlichen von dem Lagerelement 1 dadurch, dass der Hauptkörper 103 eine im Wesentlichen quaderförmige Form aufweist. Entsprechend weist das erste Beschichtungselement 107 keinen kreisförmigen, sondern einen rechteckförmigen Umfang auf.

In Figuren 4a bis 4d sind jeweilige Abwandlungen des Lagerelements 101 dargestellt. Diese zeigen nicht die beanspruchte Erfindung, sind aber hilfreich für deren Verständnis. Diejenigen Elemente der in den Figuren 4a bis 4d dargestellten Lagerelemente 101', 101", 101'" und 101 die denjenigen des Lagerelements 101 entsprechen, tragen die gleichen Bezugszeichen, allerdings einfachbeziehungsweise mehrfach gestrichen.

Bei der Abwandlung in Form des Lagerelements 101' ist auf zwei gegenüberliegenden Seiten des Hauptkörpers 103' jeweils ein erstes Beschichtungselement 107' beziehungsweise 113' angeordnet.

Bei dem Lagerelement 101" ist darüber hinaus eine Öffnung 111" vorgesehen, die sowohl in dem Hauptkörper 103" als auch an den ersten Beschichtungselementen 107" und 113" ausgebildet sind.

Hingegen ist bei dem Lagerelement 101'" die Öffnung 111'" lediglich in dem Hauptkörper 103"' ausgebildet, während die ersten Beschichtungselemente 107'" und 113'" im Wesentlichen geschlossen sind.

Im Gegensatz zu dem in den Figuren 4a bis 4c dargestellten Lagerelementen 101', 101", 101'", bei denen die Beschichtungselemente 107', 107", 107"' und 113', 113", 113'" auf gegenüberliegenden ersten beziehungsweise zweiten Oberflächen des jeweiligen Hauptkörpers 103', 103", 103"' angeordnet sind, ist bei der Abwandlung in der Figur 4d in Form des Lagerelements 101^{IV} die erste Oberfläche 105^{IV} benachbart zu der zweiten Oberfläche 117^{IV} angeordnet.

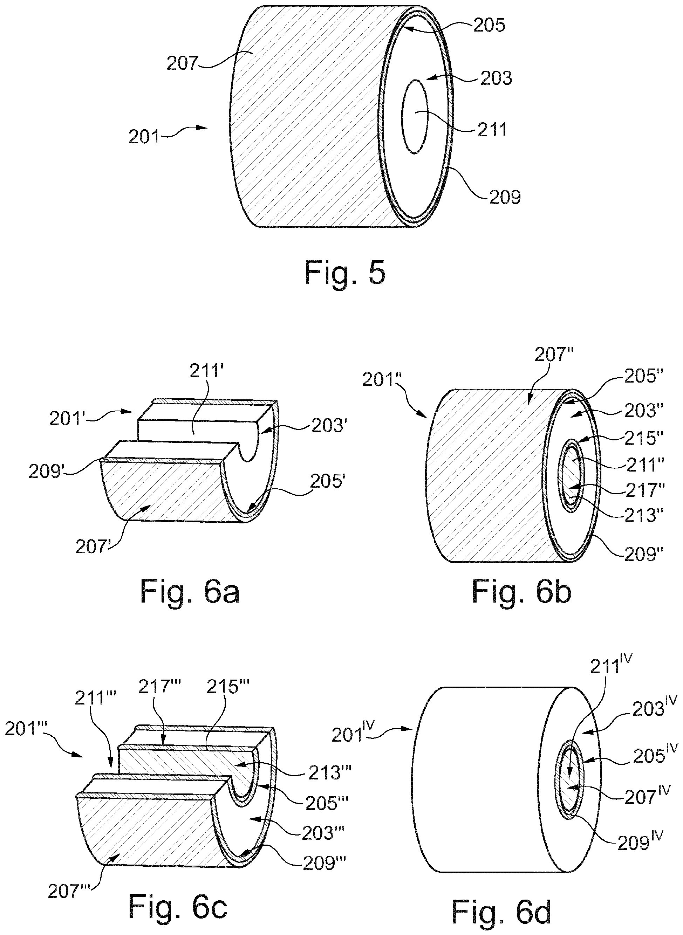

In der Figur 5 ist eine dritte Ausführungsform eines Lagerelements 201 dargestellt. Diese zeigt nicht die beanspruchte Erfindung, ist aber hilfreich für deren Verständnis. Diejenigen Elemente des Lagerelements 201, die denjenigen des Lagerelements 1 entsprechen, tragen die gleichen Bezugszeichen, allerdings um 200 erhöht.

Ähnlich dem Lagerelement 1' ist bei dem Lagerelement 201 der Hauptkörper 203 in Form eines Zylindermantels mit einer Öffnung 211 ausgebildet. Jedoch wird die erste Oberfläche 205 des Hauptkörpers 203 nicht durch die ebenen Flachseiten des Zylindermantels gebildet, sondern die erste Oberfläche 205 wird durch die Umfangsfläche des Zylindermantels gebildet.

In Figuren 6a bis 6e sind Abwandlungen des Lagerelements 201 in Form der Lagerelemente 201', 201", 201"', 201^{IV}, 201^{V}. Diese zeigen nicht die beanspruchte Erfindung, sind aber hilfreich für deren Verständnis. Diejenigen Elemente der Abwandlungen, die denjenigen Elementen des Lagerelements 201 entsprechen, tragen das gleiche Bezugszeichen, allerdings einfach bzw. mehrfach gestrichen.

Bei der in Figur 6a dargestellten Abwandlung in Form des Lagerelements 201' ist der Hauptkörper 203' als Kegelmantelsegment ausgebildet.

Bei dem Lagerelement 201" ist eine zweite Oberfläche 217" in Form der Innenwandung des Hauptkörpers 203" gebildet, so dass im Bereich der Innenwandung 217" ein weiteres erstes Beschichtungselement 213" angeordnet und mittels des Verbindungselements 215" mit dem Hauptkörper 203" verbunden ist.

In Figur 6c ist ein Lagerelement 201'" dargestellt, bei dem im Vergleich zu dem Lagerelement 201" der Hauptkörper als Kegelmantelsegment ausgebildet ist.

Bei der in Figur 6d dargestellten Abwandlung in Form des Lagerelements 201^{IV} ist ein erstes Beschichtungselement 207^{IV} ausschließlich auf der Innenfläche 205^{IV} des kegelmantelförmigen Hauptkörpers 203^{IV} angeordnet, während auf der Außenfläche des Hauptkörpers 203^{IV} kein Beschichtungselement angeordnet ist.

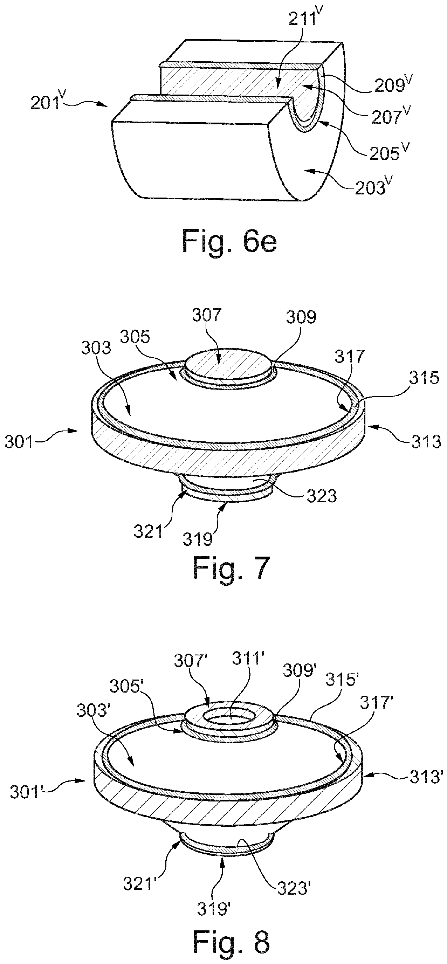

In Figur 6e ist schließlich eine fünfte Abwandlung in Form des Lagerelements 201^{V} dargestellt, bei dem im Vergleich zu dem Lagerelement 201^{IV} der Hauptkörper 2 kegelmantelsegmentförmig ausgebildet ist.

In Figur 7 ist eine vierte Ausführungsform eines Lagerelements 301 dargestellt. Diese zeigt nicht die beanspruchte Erfindung, ist aber hilfreich für deren Verständnis. Diejenigen Elemente des Lagerelements 301, die denjenigen des Lagerelements 1 entsprechen, tragen die gleichen Bezugszeichen, allerdings um 300 erhöht. Bei dem Lagerelement 301 ist der Hauptkörper 303 als Rotationsparaboloid ausgebildet. So ist eine erste Oberfläche 305 vorhanden, auf der ein erstes Beschichtungselement 307 angeordnet ist. Ferner sind mehrere zweite Oberflächen 317, 323 vorhanden auf denen jeweils ein weiteres erstes Beschichtungselement 313, 319 angeordnet ist. Dabei sind die ersten Beschichtungselemente 307, 319 scheibenförmig ausgebildet, während das weitere erste Beschichtungselement 313 auf einer ringförmigen zweiten Oberfläche 317 des Hauptkörpers 303 angeordnet ist. Ein weiteres erstes Beschichtungselement 319 ist auf einer weiteren zweiten Oberfläche 323, die der ersten Oberfläche 305 im Wesentlichen gegenüberliegt, angeordnet.

Bei der in Figur 8 dargestellten Abwandlung, die nicht die beanspruchte Erfindung zeigt, aber hilfreich für deren Verständnis ist, in Form des Lagerelements 301' wurde im Vergleich zum Lagerelement 301 die Beschichtungselemente 305, 319 durch ringförmige Beschichtungselemente 305', 319' ersetzt. Ferner weist der Hauptkörper 303' eine Öffnung 311' auf. Erneut tragen die Elemente des Lagerelements 301', die denjenigen des Lagerelements 301 entsprechen, die gleichen Bezugszeichen, allerdings einfach gestrichen.

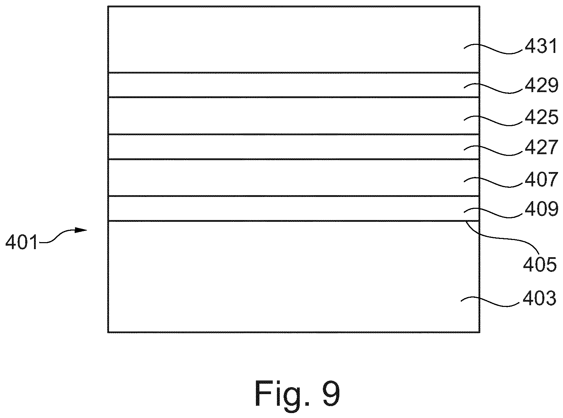

Schließlich ist in Figur 9 eine nicht maßstabgetreue schematische Querschnittansicht einer fünften Ausführungsform eines Lagerelements 401 dargestellt. Diese zeigt nicht die beanspruchte Erfindung, ist aber hilfreich für deren Verständnis. Bei dem Lagerelement 401 ist im Gegensatz zu den vorangeführten Lagerelementen eine Sandwichstruktur bestehend aus weiteren Zwischenelementen 425 und Beschichtungselementen 431, die auf der dem Hauptkörper 403 abgewandten Seite des ersten Beschichtungselements 407 angeordnet sind, vorhanden.

So ist ein erstes Zwischenelement 425, welches ein zweites Elastomermaterial umfasst, mittels eines zweiten Verbindungselements 427 mit dem ersten Beschichtungselement 407 verbunden.

Über ein drittes Verbindungselement 429 ist ein zweites Beschichtungselement 431 auf dem ersten Zwischenelement befestigt. Diese Sandwichstruktur ermöglicht es, dass die Dämpfungs- bzw. elastischen Eigenschaften durch entsprechende Auswahl der Geometrie des ersten Zwischenelements 425, insbesondere seine Dicke bzw. Materialzusammensetzung angepasst werden kann.

In nicht dargestellten Ausführungsformen, die nicht die beanspruchte Erfindung wiedergeben, aber hilfreich für deren Verständnis sind, kann vorgesehen sein, dass auf das erste Zwischenelement 425 verzichtet wird, also das zweite Beschichtungselement 431 unter Zwischenschaltung eines oder beiden der Verbindungselemente 427, 429 auf das erste Beschichtungselement 407 aufgebracht wird. Dies ermöglicht es, dass noch größere Relativbewegungen zwischen dem Hauptkörper und der zu tragenden Struktur ermöglicht werden aufgrund der Zwischenschaltung von einem oder zwei Verbindungselementen 427, 429. Darüber hinaus ist es auch möglich, dass auf das zweite Beschichtungselement 431 verzichtet wird und ein zweites Zwischenelement direkt auf das erste Zwischenelement 425 unter Zwischenschaltung eines dritten Verbindungselements befestigt wird.

In nicht dargestellten Ausführungsformen kann ferner vorgesehen, dass noch mehrere Lagen bzw. Schichten die jeweils ein Zwischenelement bzw. Beschichtungselement bzw. Verbindungselement umfassen, auf der dem Hauptkörper 403 abgewandten Seite des ersten Beschichtungselements 407 angeordnet werden.

## Patentansprüche

1. Verfahren zur Herstellung eines Lagerelements (1) umfassend die Bereitstellung eines zumindest ein erstes Elastomermaterial umfassenden Hauptkörpers (3), Bereitstellung zumindest eines zumindest einen ersten Faserverbundwerkstoff aufweisenden ersten Beschichtungselements (7) und Aufbringen des ersten Beschichtungselements (7) auf zumindest einen Bereich einer ersten Oberfläche (5) des Hauptkörpers (3), wobei der erste Faserverbundwerkstoff des ersten Beschichtungselements (7) vor dem Aufbringen auf den Hauptkörper (3) zumindest teilweise und/oder zumindest bereichsweise ausgehärtet wird und mittels Angießens und/oder Anspritzens des zumindest einen ersten Elastomermaterials zumindest bereichsweise mit dem Hauptkörper (3) verbunden wird, **dadurch gekennzeichnet, dass**
a) das erste Beschichtungselement (407) vor oder nach dem Aufbringen auf den Hauptkörper (403) auf der dem Hauptkörper (403) abgewandten Seite zumindest bereichsweise mit zumindest einem ersten Zwischenelement (425) verbunden wird,
wobei vorzugsweise das erste Zwischenelement (425) auf der dem Hauptkörper (403) abgewandten Seite bereichsweise mit zumindest einem zweiten Beschichtungselement (431) verbunden wird, oder
b) das erste Beschichtungselement (407) auf der dem Hauptkörper (403) abgewandten Seite zumindest bereichsweise mit zumindest einem zweiten Beschichtungselement (431) verbunden wird.

2. Verfahren nach Anspruch 1, **dadurch gekennzeichnet, dass**
das zumindest eine erste Elastomermaterial während des Angießens und/oder Anspritzens in einem flüssigen, fließfähigen und/oder viskosen Zustand ist, und/oder durch das Angießen und/oder Anspritzen des zumindest einen ersten Elastomermaterials der Hauptkörper ausgebildet wird,
das erste Zwischenelement (425) zumindest ein, insbesondere dem ersten Elastomermaterial im Wesentlichen entsprechendes, zweites Elastomermaterial umfasst; und/oder
das zweite Beschichtungselement (431) zumindest vorzugsweise einen, insbesondere dem ersten Faserverbundwerkstoff entsprechenden und/oder zumindest teilweise und/oder zumindest bereichsweise ausgehärten, zweiten Faserverbundwerkstoff umfasst.

3. Verfahren nach Anspruch 1 oder 2, **dadurch gekennzeichnet, dass**
das erste Beschichtungselement (407) mittels zumindest einem zweiten Verbindungselement (427) mit dem ersten Zwischenelement (425) und/oder dem zweiten Beschichtungselement und/oder das erste Zwischenelement (425) mittels zumindest einem dritten Verbindungselement (429) mit dem zweiten Beschichtungselement (431) verbunden wird, wobei vorzugsweise das zweite Verbindungselement (427) zumindest ein, insbesondere dem ersten Adhäsionsmaterial entsprechendes, zweites Adhäsionsmaterial und/oder das dritte Verbindungselement (429) zumindest ein, insbesondere dem ersten Adhäsionsmaterial und/oder dem zweiten Adhäsionsmaterial entsprechendes, drittes Adhäsionsmaterial umfasst.

4. Verfahren nach einem der vorangehenden Ansprüche, **dadurch gekennzeichnet, dass** auf der dem ersten Zwischenelement und/oder dem ersten Beschichtungselement abgewandten Seite des zweiten Beschichtungselements und/oder der dem Hauptkörper abgewandten Seite des ersten Zwischenelements zumindest ein, insbesondere zumindest ein drittes Elastomermaterial umfassendes, zweites Zwischenelement, vorzugweise eine Vielzahl von zweiten Zwischenelementen und/oder zumindest ein, insbesondere zumindest einen, insbesondere zumindest teilweise und/oder zumindest bereichsweise ausgehärteten, dritten Faserverbundwerkstoff umfassendes, dritte Beschichtungselement, vorzugsweise eine Vielzahl von dritten Beschichtungselementen, angeordnet wird, wobei insbesondere
das zweite Zwischenelement bzw. die zweiten Zwischenelemente mittels zumindest einem, vorzugsweise zumindest ein viertes Adhäsionsmaterial umfassendes, vierten Verbindungselement mit dem ersten Zwischenelement, dem zweiten Beschichtungselement und/oder einem weiteren zweiten Zwischenelement und/oder dass das dritte Beschichtungselement mittels zumindest einem, vorzugsweise zumindest ein fünftes Adhäsionsmaterial umfassendes, fünften Verbindungselement mit dem zweiten Zwischenelement, dem zweiten Beschichtungselement und/oder einem weiteren dritten Beschichtungselement verbunden wird.

5. Verfahren nach einem der vorangehenden Ansprüche, **dadurch gekennzeichnet, dass**
das erste Beschichtungselement (407), das zweite Beschichtungselement (431), das dritte Beschichtungselement und/oder die dritten Beschichtungselemente vor dem Aufbringen bzw. Verbinden im Wesentlichen vollständig ausgehärtet wird bzw. werden, und/oder dass
das erste Verbindungselement (409), das zweite Verbindungselement (427), das dritte Verbindungselement (429), das vierte Verbindungselement und/oder das fünfte Verbindungselement, insbesondere in einem zumindest bereichsweise flüssigen und/oder fließfähigen Zustand, vorzugsweise des ersten Adhäsionsmaterials, zweiten Adhäsionsmaterials, dritten Adhäsionsmaterials, vierten Adhäsionsmaterials und/oder fünften Adhäsionsmaterials, vor der Anordnung bzw. Verbindung zumindest bereichsweise auf die erste Oberfläche (405) des Hauptkörpers (403), eine dem Hauptkörper zugewandte Seite des ersten Beschichtungselementes (407), des ersten Zwischenelements (425), des zweiten Beschichtungselements (431), des zweiten Zwischenelements und/oder des dritten Beschichtungselements und/oder eine dem Hauptkörper (403) abgewandte Seite des ersten Beschichtungselementes (407), des ersten Zwischenelements (425), des zweiten Beschichtungselements, des zweiten Zwischenelements und/oder des dritten Beschichtungselements aufgebracht wird bzw. werden.

6. Lagerelement (1), herstellbar mittels einem Verfahren nach einem der vorangehenden Ansprüche, umfassend zumindest einen zumindest ein erstes Elastomermaterial umfassenden Hauptkörper (3) und zumindest ein zumindest einen ersten Faserverbundwerkstoff umfassendes erstes Beschichtungselement (7), wobei das erste Beschichtungselement (7) zumindest eine erste Oberfläche (5) des Hauptkörpers (3) zumindest bereichsweise bedeckt, wobei
das erste Beschichtungselement (7) mit dem Hauptkörper (3) durch Angießen und/oder Anspritzen des Elastomermaterials verbunden ist, wobei das Lagerelement (401) ferner zumindest ein erstes Zwischenelement (425) und/oder
zumindest ein zweites Beschichtungselement (431) umfasst.

7. Lagerelement nach Anspruch 6, **dadurch gekennzeichnet, dass** das Lagerelement (401) ferner zumindest ein zweites Zwischenelement zusätzlich zu dem ersten Zwischenelement, zumindest ein
drittes Beschichtungselement zusätzlich zu dem zweiten Beschichtungselement, zumindest ein zweites Verbindungselement (427) zusätzlich zu dem ersten Verbindungselement, zumindest ein drittes Verbindungselement (429), zumindest ein viertes Verbindungselement oder ein viertes und ein fünftes Verbindungselement umfasst, wobei insbesondere die Beschichtungselemente (407, 431) und die Zwischenelemente (425) von dem Hauptkörper (403) ausgehend zumindest bereichsweise abwechselnd aufeinander angeordnet sind, insbesondere unter zumindest bereichsweiser Anordnung zumindest eines Verbindungselementes (427) zwischen einem jeweiligen Beschichtungselement (407) und Zwischenelement (425), zumindest zwei Beschichtungselemente ohne Anordnung eines Zwischenelements zumindest bereichsweise aufeinander angeordnet sind, insbesondere unter zumindest bereichsweiser Anordnung zumindest eines Verbindungselementes zwischen den Beschichtungselementen und/oder zumindest zwei Zwischenelemente ohne Anordnung eines Beschichtungselementes zumindest bereichsweise aufeinander angeordnet sind, insbesondere unter zumindest bereichsweiser Anordnung zumindest eines Verbindungselementes zwischen den Zwischenelementen.

8. Lagerelement nach einem der Ansprüche 6 oder 7, **dadurch gekennzeichnet, dass** das erste Elastomermaterial des Hauptkörpers (3), zumindest ein, vorzugsweise angespritztes und/oder angegossenes zweites Elastomermaterial des ersten Zwischenelements (425) und/oder zumindest ein, vorzugsweise angespritztes und/oder angegossenes drittes Elastomermaterial des zweiten Zwischenelements, synthetischen Kautschuk, Naturkautschuk, Silikon-Kautschuk, Polyurethan, zumindest ein thermoplastisches Elastomer (TPE) und/oder zumindest eine Mischung zumindest zweier dieser Materialien umfasst.

9. Lagerelement nach einem der Ansprüche 6 bis 8, **dadurch gekennzeichnet, dass** der erste Faserverbundwerkstoff, zumindest ein zweiter Faserverbundwerkstoff des zweiten Beschichtungselements (431) und/oder zumindest ein dritter Faserverbundwerkstoff des dritten Beschichtungselements, vorzugsweise in zumindest eine Matrix aus zumindest einem Kunststoffmaterial eingebettet, Kohlenstofffasern, Glasfasern, synthetische Fasern, Naturfasern und/oder Mischungen zumindest zweier dieser Fasern umfasst, und/oder dass
das erste Adhäsionsmaterial, zumindest ein zweites Adhäsionsmaterial des zweiten Verbindungselements (425), zumindest ein drittes Adhäsionsmaterial des dritten Verbindungselements (429), zumindest ein viertes Adhäsionsmaterial des vierten Verbindungselements und/oder zumindest ein fünftes Adhäsionsmaterial des fünften Verbindungselements zumindest einen 2-Komponenten Klebstoff und/oder zumindest einen 2-Komponenten Harz umfasst bzw. umfassen.

10. Lagerelement nach einem der Ansprüche 6 bis 9, **dadurch gekennzeichnet, dass** das erste Beschichtungselement (7), das zweite Beschichtungselement, das dritte Beschichtungselement, das erste Zwischenelement, das zweite Zwischenelement, das erste Verbindungselement(9), das zweite Verbindungselement, das dritte Verbindungselement, das vierte Verbindungselement und/oder das fünfte Verbindungselement im Wesentlichen plattenförmig ausgebildet ist bzw. sind, insbesondere eine Ausdehnung in eine Normalenrichtung der ersten Oberfläche (5) zumindest bereichsweise geringer als eine Ausdehnung senkrecht zu der Normalenrichtung der ersten Oberfläche (5) ist, und/oder dass
auf zumindest einer zweiten Oberfläche (17") des Hauptkörpers (3") zumindest ein weiteres erstes Beschichtungselement (13"), zweites Beschichtungselement, drittes Beschichtungselement, erstes Zwischenelement, zweites Zwischenelement, erstes Verbindungselement (15"), zweites Verbindungselement, drittes Verbindungselement, viertes Verbindungselement und/oder fünftes Verbindungselement angeordnet ist bzw. sind, wobei vorzugsweise die zweite Oberfläche (17") zumindest bereichsweise auf einer der ersten Oberfläche (5") des Hauptkörpers (3") abgewandten Seite des Hauptkörpers (3") angeordnet ist, die zweite Oberfläche (17") zumindest bereichsweise parallel zu der ersten Oberfläche (5") verläuft, die erste Oberfläche (105IV) zumindest bereichsweise in die zweite Oberfläche (117IV) übergeht, insbesondere zumindest eine Kante und/oder zumindest eine Ecke des Hauptkörpers (103IV) zwischen der ersten Oberfläche (105IV) und der zweiten Oberfläche (117IV) angeordnet ist.

11. Lagerelement nach einem der Ansprüche 6 bis 10, **dadurch gekennzeichnet, dass** der Hauptkörper zumindest bereichsweise eine Würfelform, Quaderform (103), Zylinderform (3), Zylindermantelform (3'), Kegelform, Kegelstumpfform, Kegelsegmentform, Prismenform, Parabolidform und/oder Rotationsparabolidform (303) aufweist, wobei vorzugsweise die erste Oberfläche (205") von zumindest einer Außenmantelfläche des Hauptkörpers (203") und/oder die zweite Oberfläche (217') von zumindest einer Innenwandung des Hauptkörpers (203") umfasst ist bzw. sind, und/oder dass
die erste Oberfläche (5") und/oder die zweite Oberfläche (17") zumindest bereichsweise eben ist bzw. sind, und/oder dass
die erste Oberfläche (205") und/oder die zweite Oberfläche (217") zumindest bereichsweise gekrümmt und/oder gewölbt ist bzw. sind.

12. Lagerelement nach einem der Ansprüche 6 bis 11, **dadurch gekennzeichnet, dass** das erste Beschichtungselement (207, 313), das zweite Beschichtungselement, das dritte Beschichtungselement, das erste Zwischenelement (315), das zweite Zwischenelement, das erste Verbindungselement, das zweite Verbindungselement, das dritte Verbindungselement, das Vierte Verbindungselement und/oder das fünfte Verbindungselement zumindest bereichsweise ringförmig, ringsegmentförmig und/oder schalenförmig ausgebildet ist bzw. sind, und/oder dass
der Hauptkörper (3), das erste Beschichtungselement (7), das zweite Beschichtungselement, das dritte Beschichtungselement, das erste Zwischenelement (9), das zweite Zwischenelement, das erste Verbindungselement, das zweite Verbindungselement, das dritte Verbindungselement, das Vierte Verbindungselement und/oder das fünfte Verbindungselement zumindest ein Montageelement, vorzugsweise umfassend zumindest eine Öffnung (11), zumindest eine Bohrung, zumindest eine Aufnahme und/oder zumindest eine Bolzenaufnahme umfasst bzw. umfassen.

13. Lagerelement nach einem der Ansprüche 6 bis 12, **dadurch gekennzeichnet, dass** das Lagerelement (1) von zumindest einer, vorzugsweise dämpfenden, Maschinenlagerung, Fundamentlagerung und/oder Abstützung umfasst ist.

## Claims

1. A Process for manufacturing a bearing element (1), comprising providing one main body (3) which comprises at least one elastomer material, providing at least one first coating element which comprises at least one first fibre composite material, and coating the first coating element (7) to at least one portion of a first surface (5) of the main body (3), wherein the first fibre composite material of the first coating element (7) becomes at least partially and/or at least regionally hardened prior to the coating onto the main body (3), and wherein the at least one first elastomer material becomes at least regionally connected to the main body (3) by means of casting and/or injection, **characterized in that**
a) prior or after to the coating onto the main body (403), the first coating element (407) becomes at least regionally connected with at least one first intermediate element (425) on the side facing away from the main body (403), wherein preferably the first intermediate element (425) on the side facing away from the main body (403) becomes partially connected with at least one second coating element (431), or
b) the first coating element (407) on the side facing away from the main body (403) becomes at least regionally connected to at least one second coating element (431).

2. The process according to claim 1, **characterized in that** the at least one first elastomer material is in a liquid, flowable and/or viscous state during the casting and/or the injection, and/or **in that** the main body is built upon the casting and/or the injection of the at least one first elastomer material,
**in that** the first intermediate element (425) comprises at least one second elastomer material, in particular substantially corresponding to the first elastomer material; and/or
the second coating element (431) comprises preferably at least one second fibre composite material particularly corresponding to the first fibre composite material and/or being at least partially and/or at least regionally hardened.

3. The process according to claim 1 or 2, **characterized in that** the first coating element (407) is connected with the fist intermediate element (425) and/or the second coating element by means of at least one second connecting element (427), and/or **in that** the first intermediate element (425) is connected with the second coating element (431) by means of at least one third connecting element (429), wherein preferably the second connecting element (427) comprises at least one second adhesion material particularly corresponding to the first adhesion material and/or **in that** the third connecting element (429) comprises at least one third adhesion material particularly corresponding to the first adhesion material and/or to the second adhesion material.

4. The process according to one of the preceding claims, **characterized in that** at least one second intermediate element particularly comprising at least one third elastomer material, preferably a plurality of second intermediate elements, and/or at least one third coating element, preferably a plurality of third coating elements, particularly comprising at least one third fibre composite material being particularly at least partially and/or at least regionally hardened, is arranged on the side of the second coating element facing away from the first intermediate element and/or from the first coating element, and/or on the side of the first intermediate element facing away from the main body, wherein in particular the second intermediate element respectively the second intermediate elements is connected with the first intermediate element, the second coating element and/or one further second intermediate element by means of at least a fourth connecting element preferably comprising at least one fourth adhesion material, and/or **in that** the third coating element is connected with the second intermediate element, with the second coating element and/or with a further third coating element by means of at least one fifth connecting element preferably comprising at least one fifth adhesion material.

5. The process according to one of the preceding claims, **characterized in that** prior to the coating respectively the connecting, the first coating element (407), the second coating element (431), the third element and/or the third coating elements becomes respectively become substantially completely hardened, and/or **in that** prior to the arrangement respectively the connection, the first connecting element (409), the second connecting element (427), the third connecting element (429), the fourth connecting element and/or the fifth connecting element, in particular in an at least regionally fluid and/or flowable state, preferably of the first adhesion material, the second adhesion material, the third adhesion material, the fourth adhesion material and/or the fifth adhesion material, is respectively are coated at least regionally onto the first surface (405) of the main body (403), a side of the first coating element (407), of the first intermediate element (425), of the second coating element (431), of the second intermediate element and/or of the third coating element facing the main body, and/or a side of the first coating element (407), of the first intermediate element (425), of the second coating element, of the second intermediate element and/or of the third coating element facing away from the main body (403).

6. A bearing element (1) obtainable by means of a process according to one of the preceding claims, comprising at least one main body (3) comprising at least one first elastomer material and at least one first coating element (7) comprising at least one first fibre composite material, wherein the first coating element (7) covers at least regionally at least one first surface (5) of the main body (3), wherein the first coating element (7) is connected with the main body (3) by means of casting and/or injection of the elastomer material, wherein the bearing element (401) further comprises at least one intermediate element (425) and/or at least one second coating element (431).

7. Bearing element according to claim 6, **characterized in that** the bearing element (401) further comprises at least one second intermediate element in addition to the first intermediate element, at least one third coating element in addition to the second coating element, at least one second connecting element (427) in addition to the first connecting element, at least one third connecting element (429), at least one third fourth connecting element or one fourth and one fifth connecting element, wherein in particular the coating elements (407, 431) and the intermediate elements (425) are, starting from the main body (403), arranged at least regionally alternating to each other, in particular by at least regional arrangement of at least one connecting element (427) between a respective coating element (407) and intermediate element (425), wherein at least two coating elements without arrangement of one intermediate element are at least regionally arranged to each other, in particular by at least regional arrangement of at least one connecting element between the coating elements, and/or wherein at least two intermediate elements without arrangement of a coating element are at least regionally arranged to each other, in particular by at least regional arrangement of at least one connecting element between the intermediate elements.

8. Bearing element according to claim 6 or 7, **characterized in that** the first elastomer material of the main body (3) comprises at least one second elastomer material of the first intermediate element (425) preferably being cast and/or injected, and/or at least one third elastomer material of the second intermediate element preferably being cast and/or injected, synthetic caoutchouc, natural caoutchouc, silicone caoutchouc, polyurethane, at least one thermoplastic elastomer (TPE) and/or at least one mixture of at least two of these materials.

9. Bearing element according to one of the claims 6 to 8, **characterized in that** the first fibre composite material, at least one second fibre composite material of the second coating element (431) and/or at least one third fibre composite material of the third coating element comprises carbon fibres, glass fibres, synthetic fibres, natural fibres and/or mixtures of at least two of these fibres preferably being embedded in at least one matrix of at least one plastic material, and/or **in that** the first adhesion material, at least a second adhesion material of the second connecting element (425), at least a third adhesion material of the third connecting element (429), at least a fourth adhesion material of the fourth connecting element and/or at least a fifth adhesion material of the fifth connecting element comprises respectively comprise at least a two component glue and/or at least a two component resin.

10. Bearing element according to one of the claims 6 to 9, **characterized in that** the first bearing element (7), the second coating element, the third coating element, the first intermediate element, the second intermediate element, the first connecting element (9), the second connecting element, the third connecting element, the fourth connecting element and/or the fifth connecting element is respectively are substantially formed in plate shape, in particular an extension in a normal direction of the first surface (5) being at least regionally smaller than an extension vertical to the normal direction of the first surface (5), and/or in that at least one further first coating element (13"), second coating element, third coating element, first intermediate element, second intermediate element, first connecting element (15"), second connecting element, third connecting element, fourth connecting element and/or fifth connecting element is respectively are arranged on at least one second surface (17") of the main body (3"), wherein preferably the second surface (17") is arranged at least regionally on a side of the main body (3") facing away from the first surface (5") of the main body (3"), the second surface (17") extends at least regionally parallel to the first surface (5"), the first surface (105^{IV}) merges at least regionally into the second surface (117^{IV}), in particular at least one edge and/or at least one edge of the main body (103^{IV}) is arranged between the first surface (105^{IV}) and the second surface (117^{IV}).

11. Bearing element according to one of the claims 6 to 10, **characterized in that** the main body comprises at least regionally a cube shape, a cuboid shape (103), a cylindrical shape (3), a cylindrical coat shape (3'), a cone shape, a truncated cone shape, a cone segment shape, a prism shape, a parabolic shape and/or a rotational parabolic shape (303), wherein preferably the first surface (205") is respectively are encompassed by at least one outer coat surface of the main body (203"), and/or the second surface (217') is respectively are encompassed by at least one inner wall of the main body (203"), and/or **in that** the first surface (5") and/or the second surface (17") is respectively are at least regionally planer, and/or **in that** the first surface (205") and/or the second surface (217") is respectively are at least regionally curved and/or arched.

12. Bearing element according to one of the claims 6 to 11, **characterized in that** the first coating element (207, 313), the second coating element, the third coating element, the first intermediate element (315), the second intermediate element, the first connecting element, the second connecting element, the third connecting element, the fourth connecting element and/or the fifth connecting element is respectively are formed at least regionally ring shaped, ring segment shaped and/or shell shaped, and/or **in that** the main body (3), the first coating element, the second coating element, the third coating element, the first intermediate element (9), the second intermediate element, the first connecting element, the second connecting element, the third connecting element, the fourth connecting element and/or the fifth connecting element comprises respectively comprise at least one mounting element, preferably comprising at least one opening (11), at least one bore, at least one seating and/or at least one bolt seating.

13. Bearing element according to one of the claims 6 to 12 **characterized in that** the bearing element (1) is encompassed by at least one, preferably damping, machine bearing, fundament bearing and/or bearing.

## Revendications

1. Procédé, destiné à fabriquer un élément de palier (1), comportant la préparation d'un corps principal (3) comprenant au moins une première matière élastomère, la préparation d'au moins un premier élément de revêtement (7) comportant au moins une première matière composite renforcée par fibres et l'application du premier élément de revêtement (7) sur au moins une zone d'une première surface (5) du corps principal (3), la première matière composite renforcée par fibres du premier élément de revêtement (7) étant solidifiée au moins en partie et/ou au moins par zones avant d'être appliquée sur le corps principal (3) et par surmoulage et/ou surinjection de l'au moins une première matière élastomère, étant assemblée au moins par zones avec le corps principal (3), **caractérisé**
a) **en ce qu'**avant de l'appliquer sur le corps principal (403), sur le côté qui est opposé au corps principal (403), on assemble le premier élément de revêtement (407) au moins par zone avec au moins un premier élément intermédiaire (425), sur le côté opposé au corps principal (403), de préférence le premier élément intermédiaire (425) étant assemblé au moins par zones avec au moins un deuxième élément intermédiaire (431) ou ;
b) **en ce que** sur la face opposée au corps principal (403), on assemble le premier élément de revêtement (407) au moins par zones avec au moins un deuxième élément intermédiaire (431).

2. Procédé selon la revendication 1, **caractérisé en ce que** pendant le surmoulage et/ou l'injection, l'au moins une première matière élastomère est dans un état liquide, fluide et/ou visqueux, et/ou est créée par surmoulage et/ou par surinjection de l'au moins une première matière élastomère des corps principaux, **en ce que** le premier élément intermédiaire (425) comprend au moins une deuxième matière élastomère, correspondant notamment sensiblement à la première matière élastomère ; et/ou **en ce que** le deuxième élément intermédiaire (431) comprend au moins de préférence une deuxième matière composite renforcée par fibres, correspondant notamment à la première matière composite renforcée par fibres et/ou solidifiée au moins partiellement et/ou au moins par zones.

3. Procédé selon la revendication 1 ou 2, **caractérisé en ce qu'**on assemble le premier élément de revêtement (407) au moyen d'au moins un deuxième élément d'assemblage (427) avec le premier élément intermédiaire (425) et/ou avec le deuxième élément intermédiaire et/ou **en ce qu'**on assemble le premier élément intermédiaire (425) au moyen d'au moins un troisième élément d'assemblage (429) avec le deuxième élément intermédiaire (431), de préférence, le deuxième élément d'assemblage (427) comprenant au moins une deuxième matière adhésive correspondant notamment à la première matière adhésive et/ou le troisième élément d'assemblage (429) comprenant au moins une troisième matière adhésive correspondant à la première matière adhésive et/ou à la deuxième matière adhésive.

4. Procédé selon l'une quelconque des revendications précédentes, **caractérisé en ce que** sur le côté du deuxième élément intermédiaire qui est opposé au premier élément intermédiaire et/ou au premier élément de revêtement et/ou sur le côté opposé au corps principal du premier élément intermédiaire, on place au moins deuxième élément intermédiaire, comprenant notamment au moins une troisième matière élastomère, de préférence une pluralité de deuxièmes éléments intermédiaires et/ou au moins un troisième élément de revêtement comprenant notamment au moins un troisième élément de revêtement comprenant au moins une troisième matière composite renforcée par fibres, solidifiée au moins partiellement et/ou au moins par zones, de préférence une pluralité de troisièmes éléments de revêtement, notamment le deuxième élément intermédiaire, respectivement les deuxièmes éléments intermédiaires étant assemblé(s) au moyen d'au moins un quatrième élément d'assemblage, comprenant au moins une quatrième matière adhésive avec le premier élément intermédiaire, le deuxième élément de revêtement et/ou un deuxième élément intermédiaire supplémentaire et/ou **en ce qu'**on assemble le troisième élément de revêtement au moyen d'au moins un cinquième élément d'assemblage, comprenant de préférence au moins une cinquième matière adhésive avec le deuxième élément intermédiaire, le deuxième élément de revêtement et/ou un troisième élément de revêtement supplémentaire.

5. Procédé selon l'une quelconque des revendications précédentes, **caractérisé en ce qu'**avant l'application ou l'assemblage, on solidifie de manière sensiblement complète le premier élément de revêtement (407), le deuxième élément de revêtement (431), le troisième élément de revêtement et/ou les troisièmes éléments de revêtement, et/ou **en ce qu'**avant le placement ou l'assemblage, notamment dans un état liquide et/ou fluide au moins par zones de préférence de la première matière adhésive, de la deuxième matière adhésive, de la troisième matière adhésive, de la quatrième matière adhésive et/ou de la cinquième matière adhésive, on applique le premier élément d'assemblage (409), le deuxième élément d'assemblage (427), le troisième élément d'assemblage (429), le quatrième élément d'assemblage et/ou le cinquième élément d'assemblage, au moins par zones sur la première surface (405) du corps principal (403), sur un côté faisant face au corps principal du premier élément de revêtement (407), du premier élément intermédiaire (425), du deuxième élément de revêtement (431), du deuxième élément intermédiaire et/ou du troisième élément de revêtement et/ou sur un côté opposé au corps principal (403) du premier élément de revêtement (407), du premier élément intermédiaire (425), du deuxième élément de revêtement, du deuxième élément intermédiaire et/ou du troisième élément de revêtement.

6. Élément de palier (1), susceptible d'être fabriqué au moyen d'un procédé selon l'une quelconque des revendications précédentes, comprenant au moins un corps principal (3), comprenant au moins une première matière élastomère et au moins un premier élément de revêtement (7) comprenant au moins une première matière composite renforcée par fibres, le premier élément de revêtement (7) recouvrant au moins par zones une première surface (5) du corps principal (3) au moins, le premier élément de revêtement (7) étant assemblé avec le corps principal (3) par surmoulage et/ou par surinjection de la matière élastomère, l'élément de palier (401) comprenant en outre au moins un premier élément intermédiaire (425) et/ou au moins un deuxième élément de revêtement (431).

7. Elément de palier selon la revendication 6, **caractérisé en ce que** l'élément de palier (401) comprend en outre au moins un deuxième élément intermédiaire, en supplément du premier élément intermédiaire, au moins un troisième élément de revêtement, en supplément du deuxième élément de revêtement, au moins un deuxième élément d'assemblage (427), en supplément du premier élément d'assemblage, au moins un troisième élément d'assemblage (429), au moins un quatrième élément d'assemblage ou un quatrième et un cinquième éléments d'assemblage, en partant du corps principal (403), notamment les éléments de revêtement (407, 431) et les éléments intermédiaires (425) étant superposés au moins par zones en alternance, notamment avec un placement au moins par zones d'au moins un élément d'assemblage (427) entre un élément de revêtement (407) et un élément intermédiaire (425) respectifs, au moins deux éléments de revêtements étant superposés au moins par zones sans placement d'un élément intermédiaire, notamment avec un placement au moins par zones d'au moins un élément d'assemblage entre les éléments de revêtement et/ou au moins deux éléments intermédiaires étant superposés au moins par zones, sans placement d'un élément de revêtement, notamment avec un placement au moins par zones d'au au moins un élément d'assemblage entre les éléments intermédiaires.

8. Elément de palier selon l'une quelconque des revendications 6 ou 7, **caractérisé en ce que** la première matière élastomère du corps principal (3), au moins une deuxième matière élastomère du premier élément intermédiaire (425), de préférence surinjectée et/ou surmoulée et/ou au moins une troisième matière élastomère du deuxième élément intermédiaire, de préférence surinjectée et/ou surmoulée comprend du caoutchouc synthétique, du caoutchouc naturel, du caoutchouc au silicone, du polyuréthane, au moins un élastomère thermoplastique (TPE) et/ou au moins un mélange d'au moins deux desdites matières.

9. Elément de palier selon l'une quelconque des revendications 6 à 8, **caractérisé en ce que** la première matière composite renforcée par fibres, au moins une deuxième matière composite renforcée par fibres du deuxième élément de revêtement (431) et/ou au moins une troisième matière composite renforcée par fibres du troisième élément de revêtement incorporée de préférence dans au moins une matrice en au moins matière plastique, comprend des fibres de carbone, des fibres de verre, des fibres synthétiques, des fibres naturelles et/ou des mélanges d'au moins deux desdites fibres, et/ou **en ce que** la première matière adhésive, au moins une deuxième matière adhésive du deuxième élément d'assemblage (425), au moins une troisième matière adhésive du troisième élément d'assemblage (429), au moins une quatrième matière adhésive du quatrième élément d'assemblage et/ou au moins une cinquième matière adhésive du cinquième élément d'assemblage comprend ou comprennent au moins une colle bicomposants et/ou au moins une résine bicomposants.

10. Elément de palier selon l'une quelconque des revendications 6 à 9, **caractérisé en ce que** le premier élément de revêtement (7), le deuxième élément de revêtement, le troisième élément de revêtement, le premier élément intermédiaire, le deuxième élément intermédiaire, le premier élément d'assemblage (9), le deuxième élément d'assemblage, le troisième élément d'assemblage, le quatrième élément d'assemblage et/ou le cinquième élément d'assemblage est ou sont conçu(s) sensiblement sous la forme de plaques, notamment **en ce qu'**une extension dans une direction normale de la première surface (5) est inférieure au moins par zones à une extension à la perpendiculaire de la direction normale de la première surface (5) et/ou **en ce qu'**au moins sur une deuxième surface (17") du corps principal (3") est ou sont placé(s) au moins un premier élément de revêtement (13") supplémentaire, un deuxième élément de revêtement, un troisième élément de revêtement, un premier élément intermédiaire, un deuxième élément intermédiaire, un premier élément d'assemblage (15"), un deuxième élément d'assemblage, un troisième élément d'assemblage, un quatrième élément d'assemblage et/ou un cinquième élément d'assemblage, de préférence la deuxième surface (17") étant placée au moins par zones sur un côté du corps principal (3") qui est opposé à la première surface (5") du corps principal (3"), la deuxième surface (17") s'écoulant au moins par zones à la parallèle de la première surface (5"), la première surface (105^{IV}) passant au moins par zones dans la deuxième surface (117^{IV}), notamment au moins une arête et/ou au moins un angle de corps principal (103^{IV}) étant placé entre la première surface (105^{IV}) et la deuxième surface (117^{IV}).

11. Elément de palier selon l'une quelconque des revendications 6 à 10, **caractérisé en ce que** le corps principal présente au moins par zones la forme d'un dé, la forme d'un parallélépipède (103), la forme d'un cylindre (3), la forme d'une enveloppe cylindrique (3'), une forme conique, une forme tronconique, la forme d'un segment conique, une forme prismatique, une forme paraboloïde et/ou une forme paraboloïde rotative (303), de préférence la première surface (205") englobant au moins une surface d'enveloppe extérieure du corps principal (203") et/ou la deuxième surface (217') englobant au moins une paroi interne du corps principal (203") et/ou **en ce que** la première surface (5") et/ou la deuxième surface (17") est ou sont plane(s) au moins par zones et/ou **en ce que** la première surface (205") et/ou la deuxième surface (217") est ou sont curviligne(s) et/ou bombée(s) au moins par zones.

12. Elément de palier selon l'une quelconque des revendications 6 à 11, **caractérisé en ce que** le premier élément de revêtement (207,313), le deuxième élément de revêtement, le troisième élément de revêtement, le premier élément intermédiaire (315), le deuxième élément intermédiaire, le premier élément d'assemblage, le deuxième élément d'assemblage, le troisième élément d'assemblage, le quatrième élément d'assemblage et/ou le cinquième élément d'assemblage est ou sont conçu(s) au moins par zones en forme annulaire, en forme de segment annulaire et/ou en forme de coque et/ou **en ce que** le corps principal (3), le premier élément de revêtement (7), le deuxième élément de revêtement, le troisième élément de revêtement, le premier élément intermédiaire (9), le deuxième élément intermédiaire, le premier élément d'assemblage, le deuxième élément d'assemblage, le troisième élément d'assemblage, le quatrième élément d'assemblage et/ou le cinquième élément d'assemblage comprennent au moins un élément de montage, comportant de préférence au moins un orifice (11), au moins un perçage, au moins un logement et/ou au moins un logement de boulon.

13. Elément de palier selon l'une quelconque des revendications 6 à 12, **caractérisé en ce que** l'élément de palier (1) est englobé par au moins un support de machine, support de fondations et/ou un appui, de préférence amortisseurs.
